Europäisches Patentamt

(19) European Patent Office

Office européen des brevets

(11) Veröffentlichungsnummer: **0 107 757**
**A1**

## (12) EUROPÄISCHE PATENTANMELDUNG

(21) Anmeldenummer: 83107724.3

(22) Anmeldetag: 05.08.83

(51) Int. Cl.³: **G 09 F 13/02**
**G 02 F 1/133, G 01 D 11/28**

(30) Priorität: 28.09.82 DE 3235817
20.04.83 DE 3314323

(43) Veröffentlichungstag der Anmeldung:
09.05.84 Patentblatt 84/19

(84) Benannte Vertragsstaaten:
DE FR GB IT SE

(71) Anmelder: ROBERT BOSCH GMBH
Postfach 50
D-7000 Stuttgart 1(DE)

(72) Erfinder: Niemz, Peter
Reiherweg 16
D-8501 Cadolsburg 2(DE)

(72) Erfinder: Ziegler, Wolfgang Dr.
Philipp-Reis-Strasse 52
D-8510 Fürth(DE)

(72) Erfinder: Zöbl, Hartmut
Moststrasse 25
D-8510 Fürth(DE)

(54) Vorrichtung zur Ausleuchtung passiver Anzeigen.

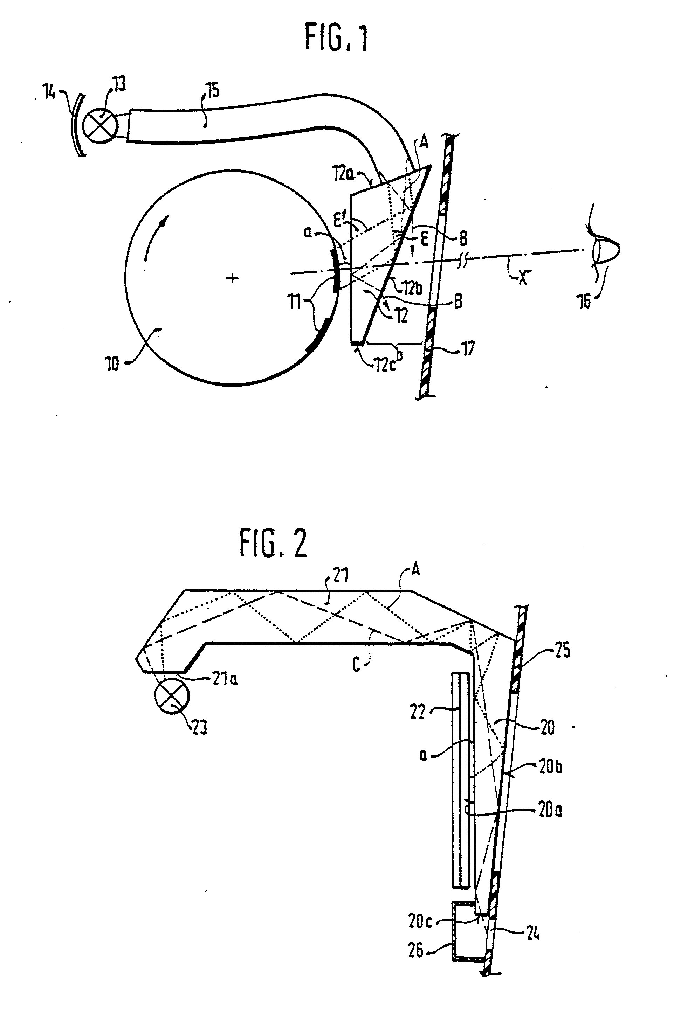

(57) Es wird eine Vorrichtung vorgeschlagen, die zur Ausleuchtung passiver Anzeigen mit einer davon getrennt angeordneten Lichtquelle dient. Die Vorrichtung besteht im wesentlichen aus einer vor der Anzeige (10) angeordneten, in ihrer Dicke keilförmig ausgebildeten Scheibe (12), in die das Licht einer Lichtquelle (13) über einen Lichtleiter (15) vom dickeren Ende der Scheibe (12) her an der Stirnfläche (12a) eintritt, an der vorderen, aus der senkrecht zur Blickrichtung (X) liegenden Ebene herausgeneigten Oberfläche (12b) der Scheibe (12) reflektiert und an der mit geringem Abstand (a) zur Anzeige hin liegenden Oberfläche (12c) der Scheibe (12) austritt. Durch diese Vorrichtung ergibt sich eine Beleuchtung der Anzeige unter steilem Winkel bei geringer Bautiefe sowie ein hoher Beleuchtungswirkungsgrad. Die Vorrichtung ist sowohl für den Einbau im Armaturenbrett von Kraftfahrzeugen und dgl. als auch für Anzeigeinstrumente in offenen oder geschlossenen Räumen zu verwenden, die eine unterschiedliche, sich verändernde oder unzureichende Helligkeit haben (Figur 1).

FIG. 1

R. **18088** i.P.

4.3.1983 Ws/Hm

0107757

ROBERT BOSCH GMBH, 7000 STUTTGART 1

Vorrichtung zur Ausleuchtung passiver Anzeigen

Stand der Technik

Die Erfindung geht aus von einer Vorrichtung zum Ausleuchten passiver Anzeigen nach der Gattung des Hauptanspruchs. Es ist bereits bekannt, beispielsweise bei
LCD-Uhren, die Anzeige vom Rand des Displays zu beleuchten. Diese Anordnung hat den Nachteil, daß nur eine
schlechte Ausleuchtung zu erzielen ist, da ein Großteil
des abgestrahlten Lichtes nicht auf die Displayscheibe
bzw. nur im großen Winkel zur Flächennormalen auf die
Displayscheibe auftrifft. Ferner ist es bekannt, passive Anzeigen durch eine diffuse Beleuchtung über reflektierende Flächen am Rand der Anzeige auszuleuchten,
wobei die Lichtquelle in dem Raum hinter der Anzeige
angeordnet ist. Diese und derartige Beleuchtungsvorrichtungen haben einen sehr schlechten Wirkungsgrad
und gewährleisten insbesondere bei größeren Anzeigeflächen keine gleichmäßige Ausleuchtung. Außerdem führt
die vor der Anzeige angeordnete Scheibe oftmals zu

. . .

Reflexionen von Lichtquellen oder hellen Bereichen in dem Raum, in dem sich der Betrachter befindet. Dies ist insbesondere bei Kraftfahrzeugen der Fall, bei denen Licht von außen durch die Fahrzeugscheiben, insbesondere die Heckscheibe auf das Armaturenbrett mit seinen verschiedenen Anzeigen fällt und deren Kontrast durch die Reflexionen an dem Deckglas reduziert.

Mit der vorliegenden Lösung wird angestrebt, derartige Anzeigen mit möglichst hohem Wirkungsgrad blendungsfrei auszuleuchten.

Vorteile der Erfindung

Die erfindungsgemäße Vorrichtung mit den kennzeichnenden Merkmalen des Hauptanspruchs hat den Vorteil, daß unter Vermeidung störender Reflexe und Spiegelungen die vor der Anzeige angeordnete, keilförmig in ihrer Dicke abnehmende Scheibe das Licht einer getrennt von der Anzeige angeordneten Lichtquelle mit hohem Wirkungsgrad und mit kleinem Ausfallwinkel zur Blickrichtung auf die Anzeige gelenkt wird. Außerdem läßt sich durch die Gestalt der Scheibe und durch die Richtung des in die Scheibe eintretenden Lichtes eine weitgehend gleichmäßige Ausleuchtung der Anzeige erreichen. Durch die keilförmige Scheibe läßt sich außerdem ein kompakter Aufbau für die Anzeige realisieren, so daß nur eine geringe Einbautiefe erforderlich ist.

Durch die in den Unteransprüchen aufgeführten Maßnahmen sind vorteilhafte Weiterbildungen und Verbesserungen der im Hauptanspruch angegebenen Merkmale möglich. Besonders vorteilhaft ist es, wenn das dünnere Ende bzw. die Spitze der keilförmigen Scheibe dem dunkleren Bereich eines unterschiedlich hellen, den Betrachter umgebenden Umfeldes zugewandt ist. Außerdem kann die Scheibe auch noch zur

...

Ausleuchtung zusätzlicher Beschriftungen einer die Anzeige einrahmenden Blende verwendet werden, indem an der
dünneren Stirnseite der keilförmigen Scheibe das dort austretende Licht auf eine unterhalb der Scheibe angebrachte
Durchsicht-Beschriftung der Blende fällt. Der geringe, vorn
zum Beobachtungsraum hin aus der keilförmigen Scheibe austretende Lichtanteil kann in einer Lichtfalle eingefangen
und ebenfalls als Zusatzbeleuchtung verwendet werden.


Zeichnung


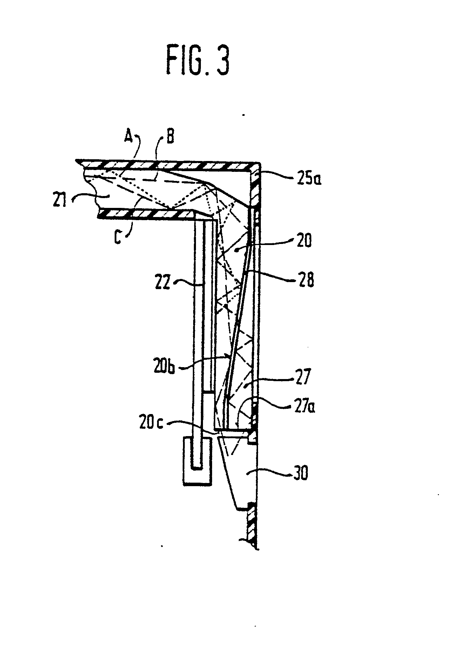

Drei Ausführungsbeispiele der Erfindung sind in der Zeichnung dargestellt und in der nachfolgenden Beschreibung
näher erläutert. Es zeigen Figur 1 die Ausleuchtung der
Anzeige eines Kilometerzählers im Kraftfahrzeug über eine
keilförmige Scheibe , Figur 2 eine mit dem Lichtleiter
einstückig ausgebildete keilförmige Scheibe zur Ausleuchtung einer LCD-Anzeige und Figur 3 zeigt die Lösung nach
Figur 2 mit einer zusätzlichen keilförmigen Scheibe.


Beschreibung der Ausführungsbeispiele


In Figur 1 ist die Beleuchtung eines Kilometerzählers 10
im Armaturenbrett eines Kraftfahrzeuges dargestellt. Der
Kilometerzähler 10 besteht aus mehreren schmalen Rollen,
die in bekannter Weise an ihrem Umfang Ziffern 11 in der
Folge von 0 bis 9 tragen und die schrittweise in Pfeilrichtung weitergedreht werden. Vor dem Kilometerzähler 10
ist eine durchsichtige Scheibe 12, vorzugsweise aus Plexiglas angeordnet. Die Scheibe 12 ist in ihrer Dicke keilförmig ausgebildet und befindet sich mit einem Abstand a
von etwa 1 mm vor der Ziffernanzeige des Kilometerzählers
10. Eine Lichtquelle 13 befindet sich hinter dem Kilo-

...

meterzähler 10. Das Licht der Lichtquelle 13 wird mit einen Reflektor 14 gebündelt auf die Stirnseite eines Lichtleiters 15 geworfen, der bis dicht an die Lichtquelle 13 heranreicht. Das andere Ende des Lichtleiters 15 ist an der Stirnfläche 12a am dickeren Ende der Scheibe 12 an dieser optisch angekoppelt, so daß das gepunktet angedeutete Lichtstrahlenbündel A von der Lichtquelle 13 in den Lichtleiter 15 und von dort am dickeren Ende der keilförmigen Scheibe 12 von der Stirnfläche 12a her in die Scheibe 12 eintritt. Abgesehen von der Divergenz des eintretenden Strahlenbündels fällt der größte Teil des Lichtes unter einem Winkel $\varepsilon$ kleiner 45° auf die vordere Oberfläche der Scheibe 12 und wird von dort total reflektiert; denn bei Verwendung von Plexiglas beträgt der Grenzwinkel für die Totalreflexion des Lichtes etwa 45°. Das reflektierte Licht fällt nunmehr unter einem Winkel $\varepsilon'$ von größer 45° auf die hintere, zur Anzeige hin liegende Oberfläche der Scheibe 12, es tritt dort aus und fällt auf die vorderen Ziffern 11 des Kilometerzählers 10. Das divergierende Licht des Strahlenbündels A, welches teilweise unter einen Winkel von kleiner 45° auf die hintere Oberfläche der Scheibe 12 fällt, wird dort zur vorderen Oberfläche hin reflektiert, dort nochmals reflektiert und erst dann über die hintere Oberfläche der Scheibe 12 ausgekoppelt. Um einen Betrachter 16 durch Spiegelungen von äußeren Lichtquellen an der vorderen Oberfläche der Scheibe 12 nicht zu irritieren oder zu blenden, ist die vordere, zum Betrachter 16 hin liegende Oberfläche 12b der Scheibe 12 aus der senkrecht zur Blickrichtung des Betrachters 16 liegenden Ebene herausgeneigt. Da durch die Fahrzeugscheiben des Kraftfahrzeuges das Tageslicht einfällt, befindet sich der Betrachter 16 in einem unterschiedlich hellen Umfeld mit einem helleren oberen und einem dunkleren unteren Bereich. Zur Vermeidung von Spiegelungen ist hier das dünnere Ende der keilförmigen Scheibe 12 dem dunkleren, unteren Bereich im Umfeld des Betrachters 16 zugewandt. Von schräg oben einfallendes Licht wird in diesem Fall durch die Oberfläche 12b der Scheibe 12 nach unten abgelenkt. Außerdem ist vor der
Scheibe 12 noch eine Blende 17 angeordnet, die aus einem
Kunststoff besteht, der im Bereich der Anzeige durchsichtig und in den umliegenden Bereichen eingefärbt ist, so
daß vom Beobachter 16 pro Zahlenrad jeweils nur eine
Ziffer 11 gesehen wird. Eine besonders gute und gleichmäßige Ausleuchtung der Anzeige ergibt sich dadurch, daß
die hintere, zur Anzeige hin liegende Oberfläche 12c der
keilförmigen Scheibe 12 nahezu senkrecht zur Blinkrichtung X des Betrachters 16 liegt. Durch die Divergenz des
Strahlenbündels A wird ein geringer, gestrichelt dargestellter Anteil B nach vorn aus der Oberfläche der keilförmigen Scheibe 12 stark nach unten geneigt ausgekoppelt.
Um zu vermeiden, daß dieser Lichtanteil B bei Dunkelheit
zu einer störenden Aufhellung der Umgebung der Anzeige
führt, hat die Blende 17 im Bereich des dünneren Endes der
keilförmigen Scheibe 12 einen Abstand b, der so gewählt
ist, daß dieser Lichtanteil B von der Blende 17 nach vorn
zum Betrachter 16 hin abgeschirmt wird.

Bei dem zweiten Ausführungsbeispiel nach Figur 2 ist
die keilförmige Scheibe 20 mit dem Lichtleiter 21 einstückig ausgebildet. Hier besteht die passive Anzeige
aus einem Flüssigkristall-Display (LCD) 22, das mit geringem Abstand a hinter der rückseitigen Oberfläche 20a der
keilförmigen Scheibe 20 angeordnet ist. Das Licht einer
Lichtquelle 23 fällt in die Stirnseite 21a des Lichtleiters 21 ein. Dabei ist der Lichtleiter 21 so gestaltet,
daß das einfallende Licht nahezu vollständig an seinen Grenzflächen reflektiert wird und schließlich am dickeren Ende
der keilförmigen Scheibe 20 in diese einfällt. Dort wird es
an der vorderen, schrägen Oberfläche 20b einfach oder mehrfach reflektiert und tritt schließlich an der hinteren,
zur Anzeige hin gerichteten Oberfläche 20a aus. Der Verlauf eines solchen Lichtbündels A ist in Figur 2 gepunktet
dargestellt. Ein relativ kleiner, durch die gestrichelte
Linie dargestellter Anteil C des gesamten Lichtstromes
wird dagegen nicht über die hintere Oberfläche 20a der

...

Scheibe 20 ausgekoppelt sondern er tritt an der Stirnseite 20c am dünneren Ende der keilförmigen Scheibe 20
aus. Das dort austretende Licht wird in vorteilhafter
Weise zur Ausleuchtung einer Durchsicht-Beschriftung
24 in einer vor der Scheibe 20 angeordneten Blende 25
verwendet. Die Ausleuchtung einer solchen Beschriftung
24 von hinten kann noch dadurch verstärkt werden, daß
das dünnere Ende der keilförmigen Scheibe 20 sowie die
Durchsicht-Beschriftung 24 der Blende 25 von einem
Reflektor 26 eingefaßt ist.

In Figur 3 ist als weiteres Ausführungsbeispiel eine
Vorrichtung zur Ausleuchtung eines Flüssigkristall-
Displays 22 dargestellt, die mit dem Ausführungsbeispiel
nach Figur 2 weitgehend übereinstimmt und bei der auch
die entsprechenden Bezugszahlen verwendet sind. Im Unterschied zu Figur 2 ist dort jedoch vor der keilförmigen
Scheibe 20 noch ein weiterer, gegenläufig ausgebildeter
lichtleitender Keil 27 aus Plexiglas angeordnet, der
zur keilförmigen Scheibe 20 hin einen kleinen Luftspalt 28 hat. Durch die Divergenz des Strahlenbündels
A wird auch hier ein gestrichelt dargestellter Anteil
B nach vorn aus der Oberfläche 20b der keilförmigen Scheibe
20 ausgekoppelt, der nun im Luftspalt 28 stark nach unten
geneigt verläuft. Er tritt    mit entsprechender Brechung
in den Keil 27 ein und wird dort an den unter dem Keilwinkel
geneigten Oberflächen des Keiles 27 so oft reflektiert,
bis er an der Stirnseite 27a am dicken unteren Ende des
Keils 27 austritt. Zur Ausleuchtung einer zusätzlichen Beschriftung an der Blende 25a ist unterhalb des Keiles
27 ein lichtleitender Körper 30 angeordnet, der den
Lichtanteil B und C aufnimmt, der an der Stirnseite
27a des Keiles 27 bzw. an der Stirnseite 20c der keilförmigen Scheibe 20 austritt. Durch Auftragen einer
reflektierenden Schicht an der Rückseite des lichtleitenden Körpers 30 kann die Ausleuchtung der Be-

...

schriftung noch verstärkt werden. Die Blende 25a ist
hier unmittelbar vorn auf dem lichtleitenden Keil 27
angeordnet. Zur Unterdrückung störender Reflexionen
und Spiegelungen von Lichteinwirkungen aus dem Beobachtungsraum ist es aber gegebenenfalls zweckmäßiger,
die Blende nach hinten geneigt vor den Keil 27 anzuordnen.

Die Erfindung ist nicht auf die dargestellten Ausführungsbeispiele beschränkt, da die Gestaltung der keilförmigen
Scheibe unmittelbar vor der Anzeige sowie die Ankopplung
des zur Lichtquelle führenden Lichtleiters je nach Größe
und Anordnung der Anzeige sowie nach den Platzverhältnissen zur Unterbringung der Lichtquelle verschiedenartig
gestaltet sein können. Wesentlich ist jedoch, daß durch
die keilförmige Scheibe das Licht über die Anzeige hinweglaufen und durch die geeignete Anstellung der vorderen
Oberfläche der Scheibe das Licht für den Beobachter unsichtbar im Bereich der Anzeige so reflektiert werden
kann, daß es an der hinteren Oberfläche der Scheibe austritt und die Anzeige in dem gewünschten Bereich beleuchtet. Durch die geringe Entfernung zwischen der Anzeige
und der Auskoppelfläche der Scheibe sind die Verluste
durch die Divergenz des Strahlenbündels gering. Außerdem
wird die Anzeige unter einem kleinen Winkel zur Blickrichtung des Betrachters beleuchtet. Gegenüber den herkömmlichen Lösungen wird dadurch eine wesentliche Steigerung des Beleuchtungswirkungsgrades erreicht. Die Anzeige selbst kann in dieser Anordnung bei einer kleinen
virtuellen Verschiebung durch die keilförmige Scheibe
hindurch abgelesen und auch im Tageslicht gut beleuchtet werden. Gleichzeitig bildet die Scheibe eine mechanische Abdeckung zum Schutz der Anzeige. Über die keilförmige Scheibe können außerdem noch zusätzliche Beschriftungen unterhalb der Anzeige ohne weitere Lichtquellen gut ausgeleuchtet werden.

R. 18088 i.P.

4.3.3983 Ws/Hm

ROBERT BOSCH GMBH, 7000 STUTTGART 1

Ansprüche

1. Vorrichtung zur Ausleuchtung passiver Anzeigen mit einer Lichtquelle und mit einer vor der Anzeige angeordneten durchsichtigen Scheibe, dadurch gekennzeichnet, daß die Scheibe (12, 20) in ihrer Dicke keilförmig ausgebildet und mit geringem Abstand (a) zur Anzeige (10, 22) angeordnet ist, daß das Licht von der Lichtquelle (13, 23) am dickeren Ende der keilförmigen Scheibe (12, 20) von der Stirnfläche (12a) her eintritt und größtenteils aus der zur Anzeige (10, 22) hin liegenden Oberfläche (12c, 20a) der Scheibe (12, 20) austritt und daß die zum Betrachter (16) hin liegende Oberfläche (12b, 20b) der Scheibe (12, 20) aus der senkrecht zur Blickrichtung (X) des Betrachters (16) liegenden Ebene heraus geneigt ist.

2. Vorrichtung nach Anspruch 1, dadurch gekennzeichnet, daß das dünnere Ende der keilförmigen Scheibe (12, 20) dem dunkleren Bereich eines unterschiedlich hellen, dem Betrachter (16) umgebenen Umfeldes zugewandt ist.

3. Vorrichtung nach Anspruch 2, dadurch gekennzeichnet, daß die zur Anzeige (10, 22) hin liegende Oberfläche (12c, 20a) der Scheibe (12, 20) nahezu senkrecht zur Blickrichtung (X) des Betrachters (16) liegt.

...

4. Vorrichtung nach Anspruch 3, dadurch gekennzeichnet, daß an der Stirnfläche (12a) am dickeren Ende der keilförmigen Scheibe (12, 20) ein zur Lichtquelle (13, 23) führender Lichtleiter (15, 21) .angeordnet ist.

5. Vorrichtung nach Anspruch 4, dadurch gekennzeichnet, daß die Scheibe (20) mit dem Lichtleiter (21) einstückig ausgebildet ist.

6. Vorrichtung nach Anspruch 5, dadurch gekennzeichnet, daß die Scheibe (12, 20) auf der der Anzeige (10, 22) abgewandten, vorderen Seite von einer Blende (17, 25) teilweise abgedeckt ist.

7. Vorrichtung nach Anspruch 6, dadurch gekennzeichnet, daß das am dünneren Ende der keilförmigen Scheibe (20) aus der Stirnseite (20c) austretende Licht auf eine unterhalb der Scheibe (20) angebrachte Durchsicht-Beschriftung (24) der Blende (25) fällt.

8. Vorrichtung nach Anspruch 7, dadurch gekennzeichnet, daß das dünnere Ende der keilförmigen Scheibe (20) und die Durchschrift-Beschriftung (24) der Blende (25) von einem Reflektor (26) eingefaßt ist.

9. Vorrichtung nach Anspruch 6, dadurch gekennzeichnet, daß die Blende (17, 25a) im Bereich des dünneren Endes der keilförmigen Scheibe (12, 20) einen derart gewählten Abstand (b) hat, daß der geringe, nach vorn aus der Oberfläche der Scheibe (12, 20) ausgekoppelte Lichtanteil (B) von der Blende (17, 25a) nach vorn abgeschirmt wird.

10. Vorrichtung nach Anspruch 6, dadurch gekennzeichnet, daß vor der keilförmigen Scheibe (20) ein durchsichtiger, gegenläufig ausgebildeter Keil (27) mit kleinem Luftspalt (28) zur Scheibe (20) angeordnet ist.

0107757

# FIG. 1

# FIG. 2

# FIG.3

Europäisches
Patentamt

**EUROPÄISCHER RECHERCHENBERICHT**

EP 83 10 7724

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | EP-A-0 056 843 (SIEMENS) <br> * Zusammenfassung; Figur * | 1,3-5 | G 09 F 13/02 <br> G 02 F 1/133 <br> G 01 D 11/28 |
| X | US-A-4 212 048 (D.E. CASTLEBERRY) <br> * Figuren 1,3 * | 1,3 | |
| A | | 2,5 | |
| X | US-A-3 561 145 (H.E. SHOTWELL) <br> * Figuren 1,4 * | 1,6,9 | |
| A | | 3-5,10 | |
| A | GB-A-1 108 411 (ROVER) <br> * Anspruch 1; Figuren 1,2 * | 2 | RECHERCHIERTE SACHGEBIETE (Int. Cl. ³) |
| A | GB-A-2 056 150 (STANDARD ELECTRIC) <br> * Anspruch 1; Figur 2 * | 7 | G 02 F 1/01 <br> G 02 F 1/133 <br> G 04 G 9/00 <br> G 01 D 11/28 |
| P,X | DE-A-3 117 781 (R. BOSCH) <br><br> * Ansprüche 1,3; Figur * | 1-3,6, 9 | |

Der vorliegende Recherchenbericht wurde für alle Patentansprüche erstellt.

| Recherchenort <br> DEN HAAG | Abschlußdatum der Recherche <br> 09-01-1984 | Prüfer <br> BORMS F. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82